# EUROPEAN PATENT APPLICATION

(11) **EP 4 640 475 A1**
(43) Date of publication of application: **29.10.2025**
(21) Application number: 23905708.6
(22) Date of filing: 07.12.2023
(51) Int. Cl.: B60L 15/20

(54) **JITTER SUPPRESSION METHOD AND SYSTEM, AND RELATED APPARATUS AND VEHICLE**

(30) Priority: 19.12.2022 CN 202211631771
(71) Applicant: XPT EDS (Hefei) Co., Ltd., Hefei City, Anhui 230601 (CN)
(72) Inventor: BI, Lu, Hefei, Anhui 230601 (CN); WANG, Pin, Hefei, Anhui 230601 (CN); HU, Leli, Hefei, Anhui 230601 (CN); LIU, Chang, Hefei, Anhui 230601 (CN); YE, Nan, Hefei, Anhui 230601 (CN); SHEN, Chen, Hefei, Anhui 230601 (CN)
(74) Representative: Vossius & Partner Patentanwälte Rechtsanwälte mbB
(86) International application number: PCT/CN2023/136992
(87) International publication number: WO 2024/131541

(57) **Abstract**

The present invention provides a viberation suppression method, system, related device, and vehicle for an auxiliary driving system, wherein the viberation suppression method comprises the following steps: collecting motor speed signals of the auxiliary drive system; extracting vibration amplitude from the motor speed signals; judging whether the vibration amplitude exceeds a preset vibration amplitude threshold, and if so, proceeding to the next step; and calculating a compensating torque based on the vibration amplitude, and applying the compensating torque to a motor of the auxiliary drive system.

## Description

### TECHNICAL FIELD

The present invention relates to the technical field of vibration suppression for an auxiliary drive system and, in particular to a vibration suppression method for an auxiliary drive system, system, related device, and vehicle.

### BACKGROUND

On a four-wheel drive pure electric vehicle configured with dual motors, there are usually two sets of electric drive assemblies: a main drive system (usually a permanent magnet synchronous motor) and an auxiliary drive system (usually an asynchronous motor). In order to ensure optimal overall operating efficiency, the auxiliary drive system is usually in a non-working state without outputting torque. When the vehicle is driving at a lower speed to speed bumps or on a road with large potholes, due to the lack of torque output from the auxiliary drive system, the motor output shaft gear and the reducer gear are in a non-fitting state. After the tire is impacted by the potholed road or speed bumps, the tire will transmit excitation to the half shaft and then to the auxiliary drive system, causing periodic torsional vibration and tooth striking, also known as "vibration", for a period of time. This will lead to obvious noise, causing poor subjective perception for the driver and passengers in the vehicle, thus resulting in the vehicle's Noise Vibration and Harshness (NVH) performance not meeting the standard.

The common approach to address the above issue is to always keep the auxiliary drive system in a low torque working state, so that the gears are always fitted together to prevent viberation. However, this approach will incur additional energy consumption and reduce the overall operating efficiency of the vehicle.

### SUMMARY

The technical problem to be solved by one aspect of the present invention is how to determine whether to provide compensating torque and the magnitude of compensating torque based on the degree of vibration of the auxiliary drive system, so as to save energy as much as possible while ensuring vibration suppression.

In addition, other aspects of the present invention also aim to solve or alleviate other technical problems existing in the prior art.

The present invention provides a vibration suppression method, system, related device, and vehicle. Specifically, according to one aspect of the present invention, a vibration suppression method for an auxiliary drive system is provided, comprising the following steps:
collecting motor speed signals of the auxiliary drive system;
extracting vibration amplitude from the motor speed signals;
judging whether the vibration amplitude exceeds a preset vibration amplitude threshold, and if so, proceeding to the next step; and
calculating a compensating torque based on the vibration amplitude, and applying the compensating torque to a motor of the auxiliary drive system.

Optionally, according to one embodiment of the present invention, before applying the compensating torque to the motor of the auxiliary drive system, further comprises the following steps:
judging whether all of the following conditions are met, and if so, applying the compensating torque, and if not, not applying the compensating torque, wherein the conditions comprise: the auxiliary drive system currently failing to output torque and vehicle speed being below a preset minimum speed threshold.

Optionally, according to one embodiment of the present invention, the vibration amplitude is extracted from the motor speed signals through a bandpass filter, wherein the bandpass filter is composed of a second-order high-pass filter and a second-order low-pass filter connected in series.

Optionally, according to one embodiment of the present invention, the compensating torque comprises a dynamic compensating torque T₁ and a constant compensating torque T₂ with a value of N, wherein the dynamic compensating torque is related to the vibration amplitude, and the constant compensating torque is determined through vehicle bench testing based on calibration.

Optionally, according to one embodiment of the present invention, the dynamic compensating torque T₁ is the product of the vibration amplitude and a compensation coefficient n, wherein the compensation coefficient is determined through vehicle bench testing based on calibration.

Optionally, according to one embodiment of the present invention, the constant compensating torque is gradually applied to the motor by linearly increasing from 0 to N, and exits from the motor by linearly decreasing from N to 0 when the compensating torque exits.

According to another aspect of the present invention, the present invention provides a vibration suppression system for an auxiliary drive system, comprising:
a collection module that collects motor speed signals of the auxiliary drive system;
a filter module that extracts vibration amplitude from the motor speed signals;
a judgment and calculation module that judges whether the vibration amplitude exceeds a preset vibration amplitude threshold, and if so, calculates a compensating torque required based on the vibration amplitude; and
an execution module that obtains compensating torque from the judgment and calculation module and applies it to the motor of the auxiliary drive system.

Optionally, according to one embodiment of another aspect of the present invention, the viberation suppression system further comprises a prediction module that determines whether all of the following conditions are met, and if so, a first control signal is sent to the execution module to perform an operation of applying compensating torque, and if not, a second control signal is sent to the execution module to not perform the operation of applying compensating torque, wherein the conditions comprise: the auxiliary drive system currently failing to output torque and the vehicle speed being below a preset minimum speed threshold.

Optionally, according to an embodiment of another aspect of the present invention, the filter module comprises a bandpass filter for extracting vibration amplitude from the motor speed signals, wherein the bandpass filter is composed of a second-order high-pass filter and a second-order low-pass filter connected in series.

Optionally, according to an embodiment of another aspect of the present invention, the compensating torque comprises a dynamic compensating torque T₁ and a constant compensating torque T₂ with a value of N, wherein the dynamic compensating torque is related to the vibration amplitude, and the constant compensating torque is determined through vehicle bench testing based on calibration.

Optionally, according to an embodiment of another aspect of the present invention, the dynamic compensating torque T₁ is the product of the vibration amplitude and the compensation coefficient n, wherein the compensation coefficient is determined through vehicle bench testing based on calibration.

Optionally, according to an embodiment of another aspect of the present invention, the execution module gradually applies the constant compensating torque to the motor by linearly increasing from 0 to N, and exits the constant compensating torque from the motor by linearly decreasing from N to 0 when the compensating torque exits.

According to yet another aspect of the present invention, the present invention provides a computer-readable storage medium on which a computer program is stored, wherein the vibration suppression method described above is implemented when the computer program is executed by a processor.

According to still another aspect of the present invention, the present invention provides a computer device comprising a memory, a processor, and a computer program stored on the memory and executable on the processor, wherein the processor implements the vibration suppression method described above when executing the computer program.

According to a futher aspect of the present invention, the present invention provides a vehicle, wherein the vehicle comprises an auxiliary drive system and the viberation suppression system described above, wherein the viberation suppression system is integrated into the auxiliary drive system and can be controlled by a vehicle controller.

The benefits of the present invention include:
1. By identifying viberation of the motor speed signals and applying compensating torque to suppress viberation based on viberation amplitude, the auxiliary drive system does not need to continuously output torque, but only needs to output torque when there is obvious viberation, thus significantly saving the energy consumption of the entire vehicle;
2. By determining the magnitude of compensating torque based on the degree of vibration of the auxiliary drive system, accurately matching the compensating torque value required using a compensation mode of combining dynamic compensating torque with constant compensating torque, and adopting a buffering method in a gradually increasing manner and a gradually decreasing manner when applying and exiting the compensating torque, the impact on the system is reduced and the driver's driving experience is improved.

### BRIEF DESCRIPTION OF THE DRAWINGS

Referring to the accompanying drawings, the above and other features of the present invention will become apparent, wherein,
FIG. 1 shows a flowchart of a vibration suppression method proposed according to an embodiment of the present invention;
FIG. 2 shows the compensating torque-time relationship curve of a vibration suppression method proposed according to an embodiment of the present invention;
FIG. 3 shows a block diagram of compensating torque control proposed according to an embodiment of the present invention; and
FIG. 4 shows a block diagram of the modules of a vibration suppression system proposed according to an embodiment of the present invention.

### DETAILED DESCRIPTION

It is easy to appreciate that according to the technical solution of the present invention, those skilled in the art can propose various alternative structural modes and implementation modes without changing the essence of the present invention. Therefore, the following specific embodiments and accompanying drawings are only exemplary explanations of the technical solution of the present invention, and should not be regarded as the entirety of the present invention or as limitations or restrictions on the technical solution of the present invention.

The oritentation terms mentioned or possibly mentioned in this description, such as "up", "down", "left", "right", "front", "rear", "front", "back", "top", and "bottom", are defined relative to the structures shown in the accompanying drawings. They are relative concepts and may therefore vary accordingly depending on their different positions and usage states. Therefore, these or other oritentation terms should not be construed as restrictive terms. In addition, the terms "first", "second", "third" or similar expressions are only used for descriptive and distinguishing purposes and cannot be understood as indicating or implying the relative importance of the corresponding components.

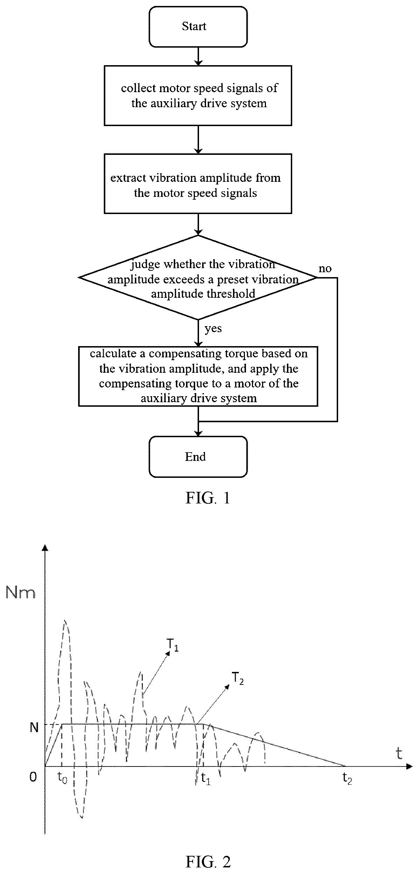

Referring to FIG. 1, it shows a flowchart of a viberation suppression method proposed according to an embodiment of the present invention. The viberation suppression method of the present invention is used in the auxiliary electric drive system of a four-wheel drive pure electric vehicle to suppress the torsional vibration and tooth tapping, also known as "viberation", between the motor output shaft gear and the reducer gear when no torque is output. The viberation suppression method comprises the following steps:
collecting motor speed signals of the auxiliary drive system;
extracting vibration amplitude from the motor speed signals;
determining whether the vibration amplitude exceeds a preset vibration amplitude threshold, and if so, proceeding to the next step; and
obtaining compensating torque based on the vibration amplitude and applying the compensating torque to a motor of the auxiliary drive system.

Wherein, collection of the motor speed signals of the auxiliary drive system can actually be done by the motor controller of the auxiliary drive system. The motor speed signals include the variation curve of motor speed relative to time.

In one embodiment of the present invention, after collecting the motor speed signals and before applying the compensating torque to the motor of the auxiliary drive system, the following steps are further included: determining whether the following conditions are all met, and if so, applying the compensating torque to the motor, and if not, not applying the compensating torque to the motor, wherein the conditions comprise: the auxiliary drive system currently failing to output torque and the vehicle speed being below a preset minimum vehicle speed threshold.

If the auxiliary drive system already has output torque, it proves that the motor output shaft gear and reducer gear of the auxiliary drive system are already fitted togerther and transmit torque for driving. That is to say, at this point, the degree of vibration of the auxiliary drive system is small and is easy to control, and there will be no obvious vibration phenomenon on the operating condition of starting at a low speed or passing speed bumps, so it is not within the scope of scenarios be coped by the technical solution. If the vehicle speed is high, that is, higher than the preset minimum speed threshold, the time of the vehicle driving through the speed bumps or potholed road is actually very short, and other noise generated by the vehicle's driving at this speed has already covered the noise generated by viberation. At this point, there is no need to implement the viberation suppression method again. The minimum speed threshold mentioned above is, for example, 20-40 km/h. Therefore, when both of the above conditions are met at the same time, that is, when the auxiliary drive system does not output torque and the vehicle speed is below the preset minimum vehicle speed threshold, the compensating torque is applied to the motor of the auxiliary drive system. This can reduce the power consumption of the auxiliary drive system by not applying compensating torque when vibration suppression is not required.

In one embodiment of the present invention, the viberation amplitude is extracted from the motor speed signals through a bandpass filter, wherein the bandpass filter is composed of a second-order high-pass filter and a second-order low-pass filter connected in series. Wherein, the second-order high-pass filter can extract speed viberation, but it has no impact on the ramp speed condition with constant acceleration, thus avoiding misjudgment of viberation under the ramp speed condition. The curve showing the variation of the viberation amplitude over time is extracted from the motor speed signals. The motor speed signals are generally a relatively smooth curve, and the speed viberation amplitude with relatively large fluctuations can be clearly obtained after filtering.

The preset vibration amplitude threshold is obtained through vehicle bench testing based on calibration, and is related to the subjective perception of vibration by the driver while driving or the passengers in the vehicle. Generally, when the vibration amplitude is higher than the vibration amplitude threshold, the vibration of the auxiliary drive system and the noise thus generated have already affected the driving experience of the driver or the riding experience of the passengers. At this point, compensating torque needs to be provided to suppress the viberation. Whereas, generally, when the viberation amplitude is lower than the viberation amplitude threshold, the viberation and the noise generated by it are tolerable or even negligible for the driver or passenger. At this point, there is no need for viberation suppression, so as to save the power consumption of the vehicle.

Referring to FIG. 2, it shows the curve representing the relationship between the compensating torque and time of the viberation suppression method proposed according to one embodiment of the present invention. In the embodiment of FIG. 2, the compensating torque comprises a dynamic compensating torque T₁ and a constant compensating torque T₂ with a value of N. The dynamic compensating torque is related to the viberation amplitude extracted from the motor speed signals, and its size is adjusted according to the size of the viberation amplitude, so as to cancel the viberation as much as possible without applying excessive torque which will increase energy consumption. In the embodiment of FIG. 2, the dynamic compensating torque T₁ is the product of the viberation amplitude and the compensation coefficient n. The compensation system is also obtained through vehicle bench testing based on calibration, and different compensation coefficients are used for different vibration amplitudes or vibration frequencies to obtain dynamic compensating torque. The constant compensating torque is a relatively small torque compared to the dynamic compensating torque, and its value N is obtained through vehicle bench testing based on calibration. The combination of dynamic compensating torque and constant compensating torque can better suppress vibration at the control level, not only reducing the vibration amplitude, but also making the speed vibration change as smoothly as possible.

Referring again to FIG. 2, in this embodiment, the constant compensating torque is gradually applied to the motor by linearly increasing from 0 to N, and exits the motor by linearly decreasing from N to 0 when the compensating torque exits. It can be seen from FIG. 2 that from time point 0 to time point t₀, the constant compensating torque increases linearly from 0 to N, which can avoid the sudden application of a constant torque with a relatively large value which will cause an impact on the motor, resulting in a bad driving experience for the driver. From time point t₀ to time point t₁, the constant compensating torque with a value of N is maintained for vibration suppression. At the end of the vibration suppression, that is, when the vibration of the auxiliary drive system is eliminated or the vibration amplitude is very small and no further vibration suppression is needed, namely, after time point t₁, the constant compensating torque begins to exit. The constant compensating torque exits the motor by linearly decreasing from N to 0 from time point t₁ to time point t₂, so as to avoid sudden exit of the compensating torque causing impact on the auxiliary drive system.

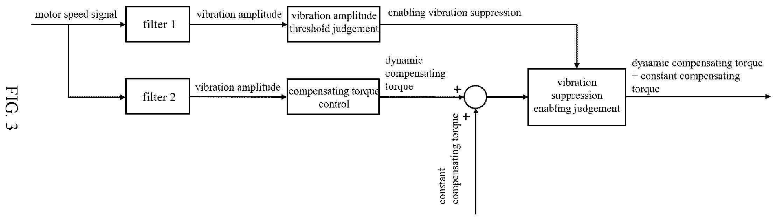

Referring to FIG. 3, it shows a block diagram of compensating torque control proposed according to one embodiment of the present invention. In the embodiment of FIG. 3, the operation of determining whether the viberation amplitude exceeds the preset viberation amplitude threshold and the operation of calculating the compensating torque are carried out in parallel. That is to say, after collecting the motor speed signals and extracting the viberation amplitude therefrom, on the one hand, the viberation amplitude is compared with the viberation amplitude threshold, and on the other hand, the dynamic compensating torque is calculated based on the viberation amplitude and then added to the constant compensating torque. The enabling judgment result of the viberation amplitude and viberation amplitude threshold determines whether to apply the sum of the ultimately obtained dynamic compensating torque and the constant compensating torque, i.e., the total compensating torque, to the motor of the auxiliary drive system.

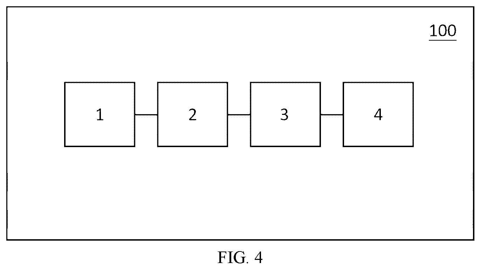

Another aspect of the present invention further proposes a viberation suppression system 100. Referring to FIG. 4, it shows a block diagram of the modules of a vibration suppression system proposed according to an embodiment of the present invention. Wherein, as the specific shape and internal structure of each component is not the subject matter of the present invention, for the sake of clarity and conciseness, all these components are illustrated in the form of structural modules. Those skilled in the art can choose appropriate module shapes and structural forms based on the inspiration given by the structural diagram. In addition, the structural diagram provided is one embodiment of the present invention, and those skilled in the art can make various modifications without departing from the spirit of the present invention after referring to the diagram. These modifications should also fall within the scope of protection of the present invention. The viberation suppression system 100 can be integrated into the auxiliary electric drive system of the vehicle, and comprises:
a collection module 1 that collects motor speed signals of the auxiliary drive system;
a filter module 2 that extracts viberation amplitude from the motor speed signals;
a judgment and calculation module 3 that determines whether the vibration amplitude exceeds a preset vibration amplitude threshold, and if so, calculates a compensating torque required based on the vibration amplitude; and
an execution module 4 that obtains compensating torque from the judgment and calculation module 3 and applies it to the motor of the auxiliary drive system.

In one embodiment of the present invention, the viberation suppression system 100 further comprises a prediction module that determines whether the following conditions are met, and if so, a first control signal is sent to the execution module to perform the operation of applying compensating torque, and if not, a second control signal is sent to the execution module to not perform the operation of applying compensating torque. The conditions include: the auxiliary drive system currently does not output torque and the vehicle speed is below the preset minimum vehicle speed threshold.

In one embodiment of the present invention, the filter module 2 comprises a bandpass filter for extracting viberation amplitude from the motor speed signals, wherein the bandpass filter is composed of a second-order high-pass filter and a second-order low-pass filter connected in series.

In one embodiment of the present invention, the compensating torque comprises a dynamic compensating torque T₁ and a constant compensating torque T₂ with a value of N. The dynamic compensating torque is related to the vibration amplitude, and the constant compensating torque is determined through vehicle bench testing based on calibration.

In one embodiment of the present invention, the dynamic compensating torque T₁ is the product of the viberation amplitude and the compensation coefficient n, wherein the compensation coefficient is determined through vehicle bench testing based on calibration.

In one embodiment of the present invention, the execution module 4 gradually applies the constant compensating torque to the motor by linearly increasing from 0 to N, and exits the constant compensating torque from the motor by linearly decreasing from N to 0 when exiting the compensating torque.

In the depiction of the present invention, modules such as "collection module" and "filter module" may include hardware, software, or a combination of both. A module can include hardware circuits, various suitable sensors, communication ports, memory, or can include software components such as program code, or can be a combination of software and hardware. The processor can be a central processing unit, microprocessor, image processor, digital signal processor, or any other suitable processor. The processor has data and/or signal processing functions. The processor can be implemented in the form of software, hardware, or a combination of both. Non-transient computer readable storage medium includes any suitable medium that can store program code, such as diskettes, hard drives, optical disks, flash memory, read-only memory, random access memory, and so on.

Furthermore, it should be appreciated that since the configuration of the control modules is only to illustrate the functional units corresponding to the viberation suppression system of the present invention, the physical devices corresponding to the control modules can be the processor itself, or a part of the software, a part of the hardware, or a part of the combination of software and hardware in the processor. Therefore, the number of control modules is only illustrative. Those skilled in the art can appreciate that the control modules can be adaptively split according to the actual situation. The specific mode of splitting the control modules will not cause the technical solution to deviate from the principle of the present invention. Therefore, the split technical solution will fall within the scope of protection of the present invention.

A third aspect of the present invention provides a computer readable storage medium on which a computer program is stored, wherein the viberation suppression method described above is implemented when the computer program is executed by a processor.

It can be appreciated that the computer readable storage medium has all the technical effects of the aforementioned viberation suppression method, which will not be repeated here.

A fourth aspect of the present invention provides a computer device comprising a memory and a processor, wherein the memory is adapted to store a plurality of program codes, and the program codes are adapted to be loaded and executed by the processor to perform the aforementioned viberation suppression method.

It can be appreciated that the computer device has all the technical effects of the aforementioned viberation suppression method, which will not be repeated here. The computer device may include control devices formed by various electronic devices.

Those skilled in the art can appreciate that the entire or part of the process of implementing the viberation suppression method of the present invention can be completed by instructing relevant hardware through a computer program, wherein the the computer program can be stored in a computer-readable storage medium. When the computer program is executed by the processor, the steps of the various embodiments of the method described above can implemented. Wherein, the computer program includes computer program code. It can be appreciated that the program code includes but is not limited to program code for executing the aforementioned viberation suppression method. For ease of explanation, only the parts related to the present invention are shown. The computer program code can be in the form of source code, object code, executable file, or some intermediate forms. The computer-readable storage medium may include: any entity or device capable of carrying the computer program code, medium, USB flash drive, portable hard disk, diskettes, optical disk, computer memory, read-only memory, random access memory, electric carrier signal, telecommunications signal, and software distribution medium. It should be noted that the content contained in the computer-readable storage medium can be appropriately added or removed according to the requirements of legislation and patent practice within the jurisdiction. For example, in some jurisdictions, according to legislation and patent practice, computer-readable storage medium does not include electric carrier signals and telecommunications signals.

A fifth aspect of the present invention provides a vehicle comprising the aforementioned viberation suppression system and auxiliary drive system. The viberation suppression system is integrated into the auxiliary drive system and can be controlled by a vehicle control unit (VCU).

It should be appreciated that the viberation suppression system of the present invention can be installed on various vehicles, including pure electric vehicles such as sedans, trucks, buses, and so on. Therefore, the subject matter of the present invention also aims to protect various vehicles configured with the viberation suppression system of the present invention.

It should be appreciated that all the above preferred embodiments are illustrative rather than restrictive. Various modifications or variations made by those skilled in the art to the specific embodiments described above under the concept of the present invention should be within the legal protection scope of the present invention

## Claims

1. A vibration suppression method for an auxiliary drive system, comprising the following steps:
collecting motor speed signals of the auxiliary drive system;
extracting vibration amplitude from the motor speed signals;
determining whether the vibration amplitude exceeds a preset vibration amplitude threshold, and if so, proceeding to the next step; and
calculating a compensating torque based on the vibration amplitude, and applying the compensating torque to a motor of the auxiliary drive system.

2. The vibration suppression method according to claim 1, wherein before applying the compensating torque to the motor of the auxiliary drive system, further comprising the following steps:
determining whether all of following conditions are met, and if so, applying the compensating torque, and if not, not applying the compensating torque, wherein the conditions include: the auxiliary drive system currently failing to output torque and vehicle speed being below a preset minimum speed threshold.

3. The vibration suppression method according to claim 1, wherein the vibration amplitude is extracted from the motor speed signals through a bandpass filter, wherein the bandpass filter is composed of a second-order high-pass filter and a second-order low-pass filter connected in series.

4. The vibration suppression method according to claim 1, wherein the compensating torque comprises a dynamic compensating torque T₁ and a constant compensating torque T₂ with a value of N, wherein the dynamic compensating torque is related to the vibration amplitude, and the constant compensating torque is determined through vehicle bench testing based on calibration.

5. A vibration suppression system for an auxiliary drive system, comprising the following steps:
a collection module that collects motor speed signals of the auxiliary drive system;
a filter module that extracts vibration amplitude from the motor speed signals;
a judgment and calculation module that judges whether the vibration amplitude exceeds a preset vibration amplitude threshold, and if so, calculates a compensating torque required based on the vibration amplitude; and
an execution module that obtains a compensating torque from the judgment and calculation module, and applies it to a motor of the auxiliary drive system.

6. The vibration suppression system according to claim 5, wherein the vibration suppression system further comprises a prediction module that judges whether the following conditions are met, and if so, a first control signal is sent to an execution module to perform an operation of applying compensating torque, and if not, a second control signal is sent to the execution module to not perform the operation of applying compensating torque, the conditions comprising: the auxiliary drive system currently failing to output torque and the vehicle speed being below a preset minimum speed threshold.

7. The vibration suppression system according to claim 5, wherein the filter module comprises a bandpass filter for extracting vibration amplitude from the motor speed signals, wherein the bandpass filter is composed of a second-order high-pass filter and a second-order low-pass filter connected in series.

8. A computer-readable storage medium, on which a computer program is stored, wherein the vibration suppression method according to any of claims 1 to 4 is implemented when the computer program is executed by a processor.

9. A computer device, comprising a memory, a processor, and a computer program stored on the memory and executable on the processor, wherein the vibration suppression method according to any of claims 1 to 4 is implemented when the processor executes the computer program.

10. A vehicle, comprising an auxiliary drive system and the viberation suppression system according to any of claims 5 to 7, wherein the viberation suppression system is integrated into the auxiliary drive system and is capable of being controlled by a vehicle controller.
